# EUROPÄISCHE PATENTSCHRIFT

(11) **EP 2 241 207 B1**
(45) Veröffentlichungstag und Bekanntmachung des Hinweises auf die Patenterteilung: **13.08.2014**
(21) Anmeldenummer: 10172198.3
(22) Anmeldetag: 05.03.2007
(51) Int. Cl.: A43B 13/12, A43B 17/14, A43B 17/00, A43B 19/00, B29D 35/12

(54) **Schaumkunststoff-Schuheinlegesohlen-Rohling**
Foam plastic shoe insole blank
Ébauche pour semelle intérieure de chaussure

(43) Veröffentlichungstag der Anmeldung: 20.10.2010
(62) Teilanmeldung aus: 07004486.2
(73) Patentinhaber: Spannrit Schuhkomponenten GmbH, 63801 Kleinostheim (DE)
(72) Erfinder: Katzer, Roland, 63801, Kleinostheim (DE)
(74) Vertreter: Leske, Thomas

(56) Entgegenhaltungen:
- EP-A- 1 602 294
- EP-A- 1 654 946
- GB-A- 2 039 716
- US-A1- 2003 070 321
- US-A1- 2005 138 847

## Beschreibung

Die Erfindung betrifft eine Schaumkunststoff-Schuheinlegesohle mit einem Kernteil und einem insbesondere durch Fräsen oder Schleifen erzeugten Fußbett.

In vielen Fällen werden Einlegesohlen mit stoßdämpfenden Eigenschaften verlangt, welche den Fuß und die Gelenke beim Gehen und Laufen schonen und so ausgebildet sind, dass die biomechanischen und physikalischen Gesetzmäßigkeiten beim Gehen oder Laufen unterstützt werden. Üblicherweise besteht ein fertiges gepolstertes Fußbett aus einem harten Grundkörper, der sohlenseitig angeordnet ist und dem fußseitig ein geeignet geformter Polsterkörper aus einem weicheren und elastischeren Material im Vergleich zum Grundkörper aufgesetzt oder angeschäumt ist. Hierbei werden vielfach mit Schaumkunststoff geschäumte Sohlen eingesetzt, die insbesondere mit PU- oder EVA-Schaum hergestellt werden. Hierzu werden zunächst PU-Schaum-Rohlinge hergestellt, deren Fußbett auf einer dem Fuß zugewandten Oberseite durch Fräsen, Schleifen oder ähnlichem in dem PU-Schaum erstellt wird. Die dem Fuß abgewandte Unterseite der fertigen Einlegesohlen muss dabei an den Schuh in den die Einlage eingelegt werden soll, angepasst sein.

GB 2 039 716 A zeigt eine in einer Form ausgeformte Sohle, die nach ihrer Fertigstellung, beispielsweise als Außensohle, mit innen angeordneter Polsterung für einen Schuh verwendbar ist. Dabei wird ein flexibles, plattenförmiges, ebenes Material zunächst in eine Sohlenkontur gestanzt und das ausgestanzte Material damenschuhform-ähnlich in der Form festgesetzt und, sowohl von der Innenseite als auch der Außenseite, zumindest teilweise mit Kunststoff angegossen. Hierbei stabilisiert der Kunststoff das flexible textilartige Plattenmaterial in einer dreidimensionalen Form.

US 2003/0070321 A1 zeigt eine aus Urethankunststoff gegossene Schuhinnensohle mit einem darin aufgenommenen Einsatzteil, welches eben, d.h. plattenförmig mit einer konstanten Wandstärke ausgebildet ist. Damit das plattenförmige Einsatzteil beim Gießprozess, ggf. mit physikalischem Aufschäumen, nicht aufschwimmt, wird es von Niederhaltern am Boden der Gießform festgehalten. Die fuß- und schuhspezifischen Ausgestaltungen werden bei dieser Sohle rein durch den Sohlenkörper erzielt. Das verwendete Einsatzteil ist dabei weicher als das das Einsatzteil umgebende Sohlenmaterial, womit durch das Einsatzteil weder eine Stützwirkung auf das es umgebende Sohlenmaterial noch auf den Fuß des Trägers der Schuhinnensohle erreicht wird.

Aus EP 1 602 294 ist eine Polyurethan-Schaum-Einlegesohle bekannt, die ein hartes Kernteil aufweist, welches aus thermoplastischem Urethan ausgebildet ist. Dabei wird das Kernteil zunächst allseitig mit Polyurethan-Schaumstoff umschäumt. Hierzu wird das Kernteil in einer Ausschäumwanne fixiert und darin allseitig mit PU-Schaum umschäumt bzw. ummantelt. Damit das harte Kernteil mit dem Polyurethan-Schaum eine dauerhafte Verbindung ausbildet, wird das Kernteil bevorzugt aus thermoplastischem Urethan hergestellt, welches mit dem PU-Schaum eine nicht lösbare Verbindung eingeht. Zur weiteren Verstärkung der Verbindung zwischen Kernteil und PolyurethanSchaum sind in dem Kernteil Durchbrüche vorgesehen, durch die der PU-Schaum hindurchtreten kann und Verbindungsstege von der Unterseite des Kernteils zu der Oberseite des Kernteils, welche dem Fuß zugewandt ist, ausbilden kann.

In dem so erzeugten PU-Schaum-Rohling wird in einem nächsten Schritt durch Abtragen von PU-Schaummaterial, beispielsweise durch Fräsen oder Schleifen, auf seiner Oberseite ein Fußbett eingebracht.

Nachteilig an der oben genannten Einlegesohle gemäß EP 1 602 294 A1 ist, dass beim Umschäumen des Kernteils nicht nur dessen fußseitige Oberseite, sondern auch dessen schuhsohlenseitige Unterseite mit Polyurethan-Schaum umschäumt wird. Da die Unterseite des PU-Schaum-Rohlings meist entsprechend der Ausschäumform eben ist, muss die Einlegesohle dem Schuh, in den sie eingelegt werden soll, angepasst werden. Dies erfolgt üblicherweise durch manuelles Schleifen der Unterseite des Schaumkunststoffrohlings. Dies ist nicht nur aufwändig, sondern erfordert auch viel Übung und Kenntnis von der den Prozessschritt ausführenden Person.

Um diese zeitraubende Anpassarbeit zu verkürzen, gibt es bereits Lösungsansätze, welche die Rohlinge (Fräsblöcke) durch geeignete geformte Ausschäumformen von unten annähernd in die an einen Schuh angepasste Form bringen und für welche somit außer dem Fußbett nur noch geringe Anpassungsarbeiten an der Unterseite notwendig sind. Dies hat aber den Nachteil, dass man für jede Größe und Form der Einlegesohle bzw. des Schuhs, in welche die Einlegesohle aufgenommen werden soll, eine passende Aufnahme benötigt. Der Aufwand des Wechselns der Formen ist dabei ähnlich groß wie der manuelle Aufwand des Schleifens der Unterseiten der Rohlinge, die in herkömmlichen ebenen Formen gegossen wurden.

Aufgabe der Erfindung ist es daher, eine Einlegesohle bereitzustellen, welche die Nachteile des Standes der Technik vermeidet, und ein Verfahren zur Verfügung stellt, das es ermöglicht, eine derartige Einlegesohle mit geringerem Aufwand als im Stand der Technik herzustellen.

Die Aufgabe wird durch eine Schaumkunststoff-Schuheinlegesohlen-Rohling mit den Merkmalen gemäß Anspruch 1 gelöst, deren Herstellung durch ein Verfahren mit den Merkmalen gemäß Anspruch 8 verwirklicht wird.

Vorteilhafte Weiterentwicklungen der erfindungsgemäßen Einlegesohle bzw. des erfindungsgemäßen Verfahrens sind in den jeweiligen abhängigen Ansprüchen definiert gerichtet.

Die erfindungsgemäße Schaumkunststoff-Einlegesohle umfasst ein Kernteil, das als Formteil ausgebildet und zumindest teilweise mit Schaumkunststoff ummantelt ist. Dabei weist das Kernteil eine dem Fuß zugewandte Innenfläche und eine dem Fuß abgewandte Außenfläche auf. Zumindest Teilbereiche der Innenfläche sind so ausgebildet, dass sie mit dem Schaumkunststoff eine dauerhafte Verbindung eingehen, und die Außenfläche ist so ausgebildet, dass ein daran angelagerter Schaumkunststoff vorzugsweise manuell leicht ablösbar ist, d.h. dass dort angelagerter Schaumkunststoff ohne maschinelle Hilfe von der Außenseite abgelöst werden kann.

Vorzugsweiseweise ist das Kernteil durch Spritzgießen hergestellt, das weiter bevorzugt bereits in Größe und Form dem Schuh, in den die Einlegesohle eingesetzt werden soll, angepasst ist. Das Kernteil der Einlegesohle, welches im Vergleich zum eingesetzten Schaumkunststoff hart ist, kann beispielsweise aus einer Polyethylen-Korkmischung bestehen. Andere Materialien wie z. B. Polypropylen, Ethylenvinylacetat oder thermoelastische oder thermoplastische Kunststoffe aller Art sind ebenso verwendbar, wie Kautschukwerkstoffe oder sonstige Materialien, die geeignet sind, das Kernteil als Formteil auszubilden. Dabei ist die Herstellung des Kernteils nicht auf das Spritzgussverfahren beschränkt.

Im Gegensatz zum oben genannten Stand der Technik muss bei der Materialpaarung das Material für das Kernteil und das Material für den angeschäumten Polsterkörper jedoch so gewählt werden, dass sich die beiden Materialien beim Anschäumen des Polsterkörpers an das Kernteil nicht dauerhaft verbinden.

Das vorgefertigte Formteil bzw. Kernteil ist in der späteren fertigen Einlegesohle auf der Unterseite, d. h. der der Schuhsohle zugewandten Seite bzw. der der Fußsohle abgewandten Seite angeordnet. Das Kernteil erstreckt sich bevorzugt vom Mittelfußbereich bis zum Fersenbereich. Bei geeigneter Ausgestaltung des Kernteils kann sich dieses aber auch über die gesamte Länge der Fußsohle erstrecken. Das Kernteil lässt sich in geeigneter Weise derart formen, um etwa als Stütze, beispielsweise für Spreizfüße, zu dienen und stabilisiert andererseits den weichen und flexiblen Schaumkunststoff. Das Kernteil, welches nach individuellen Anforderungen an die Einlegesohle erstellt werden kann, wird in einem nächsten Schritt mit Schaumkunststoff umschäumt und bildet in diesem Stadium den sogenannten Rohling, welcher auch als Fräsblock bezeichnet wird.

Das Fußbett wird im folgenden Schritt auf der dem Fuß zugewandten Oberseite der Einlegesohle erzeugt. Dies erfolgt beispielsweise durch Abfräsen der überschüssigen Schaumkunststoffmasse. Es sind aber auch andere materialabnehmende Verfahren möglich. Dabei sollte jedoch ein Verfahren gewählt werden, welches die Fußbettform der späteren Einlegesohle den Vorgaben entsprechend herausarbeiten kann. Durch die bevorzugt gewählte Materialpaarung muss die Unterseite, d. h. die Seite der Einlegesohle, welche der Fußsohle abgewandt ist, nicht maschinell bearbeitet werden, da hier das Schaumkunststoffmaterial von dem Kernteil manuell leicht abgelöst werden kann. Das beim Aufschäumen der Einlegesohle an deren Unterseite bzw. an der Außenseite des Kernteils angelagerte und dort für die Einlegesohle überflüssige Schaumkunststoffmaterial kann dabei ohne Hilfsmittel etwa in der Art eines Tesafilms von der Außenseite des Kernteiles abgezogen werden.

Das allenfalls geringe Anhaften des Schaumkunststoffs an der Außenseite des Kernteils soll dabei nur so stark sein, dass Schaumkunststoff, welcher sich an der Außenseite des Kernteils anlagert, beispielsweise per Hand abgezogen werden kann. Unter leichtem Ablösen soll auch ein Abschaben des Schaumkunststoffs mit einer biegesteifen Vorrichtung wie etwa mit einem Messer oder einer Spachtel verstanden werden.

Damit sich das Schaumkunststoffmaterial nicht auch von der Oberseite des Kernteils, also der fußzugewandten Seite des Kernteils ablöst, wird auf dieser Seite bei der Herstellung des Kernteils bzw. des Formteils beispielsweise ein Vlies zumindest auf Teilbereiche der Innenseite des Kernteils aufgebracht. Vorzugsweise, wenn das Kernteil im Spritzgussprozess hergestellt wird, wird das Vlies in das Spritzgusswerkzeug vor dem Spritzvorgang eingelegt. Die Oberseite, welche gleichzeitig auch als Innenseite des Kernteils bezeichnet wird, kann aber auch durch andere Materialien derart vorbereitet werden, dass bei einem An- oder Aufschäumen das Schaumkunststoffmaterial beispielsweise in Hinterschneidungen eingreifen kann, welche auf der Innenfläche des Kernteils ausgebildet sind, und so eine dauerhafte Verbindung zwischen der Innenseite des Kernteils und dem Schaumkunststoffmaterial entsteht. Dies kann bevorzugt durch Aufbringen eines Vlieses erfolgen, aber auch eine geeignete Oberflächenrauheit des Kernteils kann dafür ausreichend sein.

Es ist ebenfalls denkbar, dass die Innenseite des Kernteils mit einer zusätzlichen Schicht versehen wird, welche sowohl mit dem Material des Kernteils als auch mit dem verwendeten Schaumkunststoff eine dauerhafte Verbindung eingeht. Hierbei können Folien, welche im Spritzgussherstellungsprozess des Einlegeteils eingesetzt werden, als auch Kleber oder Klebefolien zum Einsatz kommen. Zur Verwirklichung des Erfindungsgedankens ist hierbei nur wichtig, dass das Schaumkunststoffmaterial an der Innenseite des Kernteils dauerhaft anhaftet und sich von der Außenseite des Kernteils leicht durch manuelles Abziehen lösen lässt. Auch ein Anätzen der Innenfläche des Kernteils kann dabei den gewünschten Erfolg erzielen.

Durch das leichte Ablösen des Schaumkunststoffmateriales von der Außenseite des Kernteils kann nach der Formgebung der Einlegesohle, also nach dem fußbettgebenden Prozessschritt, die äußere (Rand-) Kontur in den Rohling bzw. den Fräsblock eingebracht werden, wobei diese durch Fräsen, Schneiden, Ausstechen oder Ähnliches erzeugt werden kann. Der nach dem Zuschneiden der Kontur der Einlegesohle an der Außenseite des Kernteils noch anhaftende Schaumkunststoff kann dann ohne weiteres, beispielsweise per Hand, abgezogen werden. Ein weiteres Fräsen oder Schleifen der Unterseite, wie bei den Einlegesohlen gemäß des Standes der Technik, ist nicht mehr notwendig.

Eine Nacharbeitung der Unterseite der Einlegesohle bei der Herstellung der Einlegesohlen gemäß dem oben genannten Stand der Technik ist somit praktisch nicht mehr notwendig, und die aufwändige und viel Übung erfordernde Handarbeit zum Anpassen der Sohlenunterseiten ist ebenfalls überflüssig und kann mit dem erfindungsgemäßen Herstellverfahren vermieden werden.

Vorzugsweise weist das Kernteil an seiner Unterseite, welche dem Fuß abgewandt ist, Fixiereinrichtungen auf, die das Kernteil bei dem Einlegen in die Ausschäumform in einer vorbestimmten Lage und dabei an einem vorbestimmten Ort halten. Hierbei sollte das Einlegteil derart in die Ausschäumform eingelegt werden, dass die Unterseite des Kernteils im Wesentlichen parallel, mit dem kleinstmöglichen Abstand zum Boden der Ausschäumform zu liegen kommt. Dadurch wird zum Einen ein unnötiger Materialverbrauch an Schaumkunststoff vermieden, aber zum Anderen auch gewährleistet, dass zumindest Teile der Außenseite des Kernteils nach Entfernen des Rohlings aus der Ausschäumform sichtbar bleiben und ein Entfernen von überschüssigen Schaumkunststoff von der Außenseite des Kernteils mit den Fingern erleichtert wird.

Weiter vorzugsweise können dieselben Fixiereinrichtungen, welche in dem Kernteil zum Fixieren beim Anschäumen in der Aufschäumwanne vorgesehen sind, auch beim Einbringen des Fußbettes durch Fräsen, Schleifen oder ähnlichen Materialabtrag verwendet werden. Wodurch aber nicht ausgeschlossen werden soll, dass beide Prozessschritte jeweils eigene Fixiereinrichtungen aufweisen. Die bevorzugte Ausgestaltung derartiger Fixiermittel sind in das Kernteil eingebrachte Durchgangslöcher. Bevorzugt werden je Kernteil 3 Stück angeordnet, in die dann sowohl bei der Fixierung des Kernteils in der Aufschäumwanne, als auch bei der Fixierung des Fräsblocks bzw. Schaumkunststoff-Rohlings bei der Ausarbeitung des Fußbettes, Stützstifte eingreifen. Diese Stützstifte können das Bauteil, bei geeigneter Ausbildung der Stützstifte nicht nur gegen Verschieben fixieren, sondern auch gegen vertikale Bewegungen, wie beispielsweise ein Aufschwimmen in der Ausschäumform.

Für das Erreichen verschiedener Eigenschaften der Einlegesohle kann das Kernteil in vielen Ausführungsvarianten ausgebildet werden, die die verschiedenen Anforderungen, die an eine Einlegesohle gestellt werden können, erfüllen. So kann beispielsweise zur Erhöhung der Dämpfungseigenschaften im Fersenbereich der Einlegesohle das Kernteil mit einer Ausnehmung versehen werden. Damit ist die Schichtdicke an Schaumkunststoff in diesem Bereich lokal erhöht, und es wird eine verbesserte Dämpfung erreicht.

Bei einer vollflächigen Unterlegung der Einlegesohle durch ein Kernteil kann beispielsweise eine Ausnehmung im Bereich der Zehenwurzeln vorgesehen sein, damit die Flexibilität der Sohle insgesamt beim Gehen oder Laufen erhalten bleibt. Eine Unterstützung des Zehenbereichs kann, wie von einem Fachmann leicht ersichtlich, auch durch ein separates Kernteil im Zehenbereich erfolgen.

Weitere Merkmale und Vorteile der Erfindung ergeben sich aus der nachfolgenden Beschreibung der Figuren. Die Figuren zeigen:
- Figur 1:: Eine schematische schuhsohlenseitige Draufsicht der erfindungsgemäßen Einlegesohle;
- Figur 2:: Die Einlegesohle schematisch im Querschnitt längs der Linie A-A der Figur 1;
- Figur 3:: Die Einlegesohle schematisch im Längsschnitt längs der Linie B-B der Figur 1.

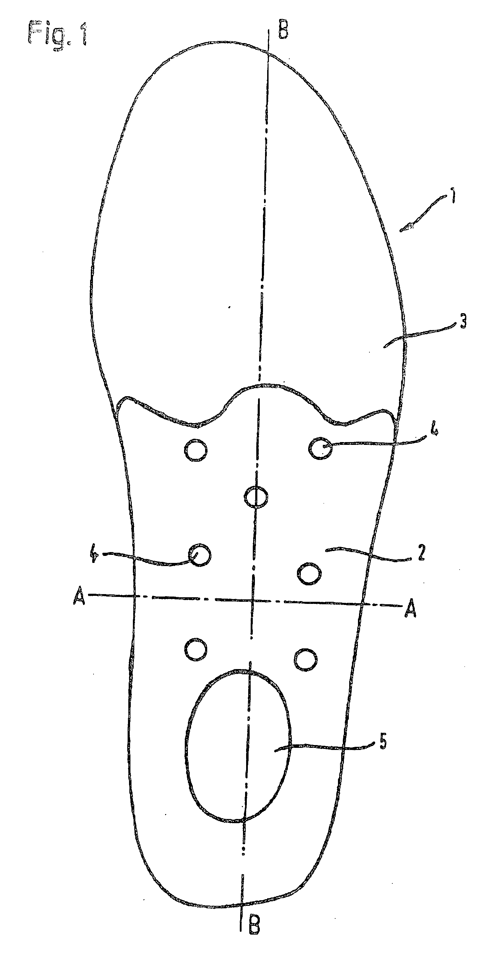

In Figur 1 ist die Schaumkunststoff-Einlegesohle 1 schematisch dargestellt. Sie umfasst ein hartes Kernteil 2, das vom Fersenbereich bis etwa in den Bereich des Mittelfußes reicht und eine stabilisierende Wirkung auf die Einlegesohle 1 ausübt. Das Kernteil 2 ist zumindest an seiner Oberseite, d. h. der fußzugewandten Innenseite mit Schaumkunststoff 3 angeschäumt, der eine ca. 96 %ige Rückstellkraft besitzt.

Das Kernteil 2 ist beispielsweise als Spritzgussteil aus einer Mischung aus Polyethylen (PE), Polypropylen (PP) oder Ethylenvinylacetat (EVA) gefertigt. Jedoch kann das Kernteil 2 aus jedem beliebigen Material gefertigt sein, welches sich nicht mit dem Schaumkunststoff verbindet. Das Kernteil 2 wird beispielsweise von Bohrungen 4 durchsetzt, welche unterschiedliche Durchmesser aufweisen können. Hiermit kann zum einen die Härte und die Elastizität des Kernteils 2 beeinflusst werden, und zum anderen kann mittels der Bohrungen 4 das Kernteil 2 in der Ausschäumform festgelegt werden. Des weiteren können diese Bohrungen dazu dienen, dass der ausgeschäumte Rohling, nachdem er aus der Ausschäumform genommen wurde, über diese Bohrungen 4 beim Fräsen des Fußbettes fixiert wird. Schließlich führt das sich durch die Bohrungen 4 erstreckende Schaumkunststoffmaterial auch zu einer festeren Verbindung zwischen dem Kernteil 2 und der Schaumstoffpolsterung 3.

Das Kernteil 2 weist im Fersenbereich eine ovale Ausnehmung 5 auf, welche in Längsrichtung der Einlegesohle größer ist als in Querrichtung. Damit wird erreicht, dass die Fersenmitte der Einlage ohne Versteifung bleibt und die Einlegesohle an dieser Stelle eine verbesserte Dämpfung aufweist. Die Sohle besteht an dieser Stelle lediglich aus Schaumkunststoff mit einer Dicke von mehreren mm und bildet auf diese Weise eine stoßabsorbierende Fersenmulde.

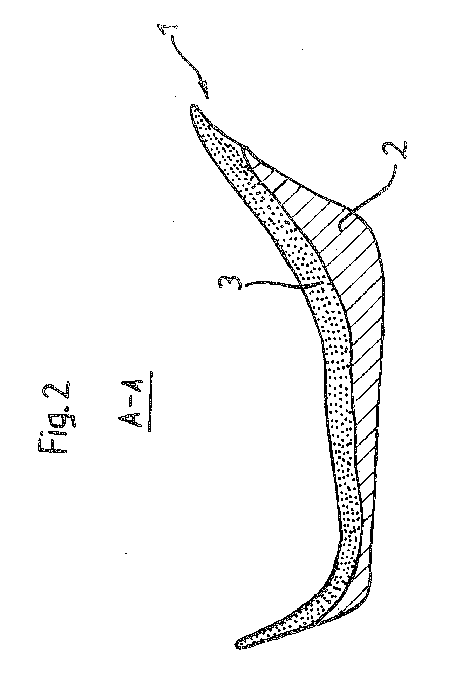

Figur 2 zeigt die Einlegesohle im Querschnitt längs der Linie A-A der Figur 1. Ausgebildet ist ein relativ hoher Schalenrand. Weiterhin ist schematisch die Stützung angedeutet, die für Spreizfüße üblich ist.

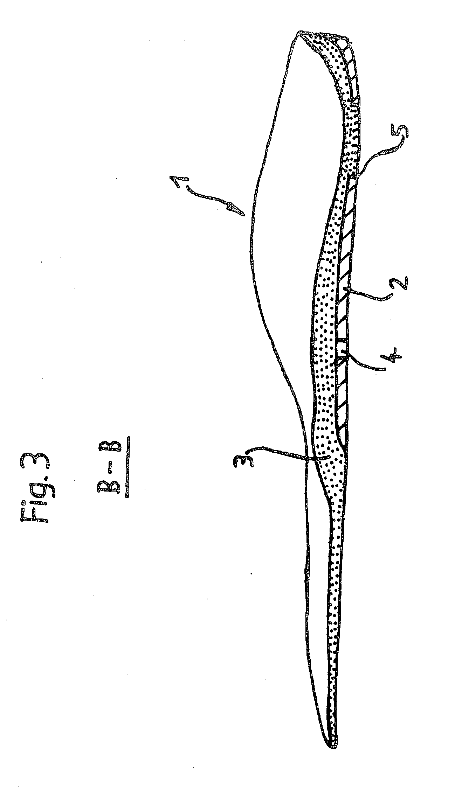

Figur 3 gibt einen Längsschnitt durch die Schaumkunststoff-Einlegesohle längs der Linie B-B von Figur 1 wieder. Hier sieht man die Aussparung 5 im Fersenbereich, die anatomische Längsgewölbeausarbeitung sowie das mit Schaumkunststoff bedeckte Kernteil 2 mit einer Bohrung 4, das die Stützung des Fußes und die Stabilisierung der Einlage bewirkt.

Nach dem erfindungsgemäßen Herstellungsverfahren wird zunächst das Kernteil 2 hergestellt, wobei aus einem breiten Spektrum verfügbarer Härten und Materialen ein geeignetes Material ausgewählt wird. Die Auswahl des Materiales erfolgt je nach gewünschtem Unterstützungseffekt bzw. dem orthopädischen Effekt der Einlegesohle. Das Kernteil wird anschließend in die Ausschäum-Form eingelegt, wobei es durch Stützstifte, die in die entsprechenden Bohrungen 4 des Kernteils 2 eingreifen, in der Ausschäumform fixiert wird. Beispielsweise werden dabei drei Stützstifte von den Bohrungen 4 derart aufgenommen, dass das Kernteil in seiner Lage innerhalb der Ausschäumform fixiert ist. Dabei ist beispielsweise eine verrastbare Verbindung zwischen einer Bohrung 4 und einem Stützstift vorgesehen, so dass das Kernteil 2 beim Ausschäumen der Form nicht aufschwimmen kann bzw. von dem Schaumkunststoff nicht mehr als unvermeidbar unterspült wird. Nach Festsetzung des Kernteils in der Ausschäumform wird diese mit Schaumkunststoff ausgeschäumt, wobei dadurch der Fräsblock bzw. Rohling gebildet wird.

Nach Aushärten des Schaumkunststoffs in der Ausschäumform wird der Rohling aus der Ausschäumform entnommen und dem nächsten Bearbeitungsschritt zugeführt. Dies kann beispielsweise das Einbringen des Fußbetts auf der Oberseite der Einlegesohle sein. Die Einbringung des Fußbettes geschieht vorzugsweise durch Fräsen, beispielsweise mit einer Dreiachsen-Fräsmaschine. Aber auch andere Materialabtragverfahren, wie z. B. Schleifen, können zur Anwendung kommen.

Nach dem Einbringen der Fußbettform wird die Kontur, vorzugsweise in Projektion, im gleichen Bearbeitungsschritt ausgeschnitten. Dabei kann durch Einsatz eines geeigneten Fräsers die Außenkontur gleich zusammen mit dem Fräsen des Fußbettes mit erzeugt werden.

Gemäß dem Stand der Technik mussten die bis dahin hergestellten Einlagesohlen nach dem Fräsen des Fußbettes von der Unterseite, d. h. von der fußabgewandten Seite, durch Schleifen, was meist manuell erfolgt, an den jeweiligen Schuh, in den die Sohlen eingelegt werden sollen, angepasst werden. Nach dem erfindungsgemäßen Herstellverfahren wird der an der Unterseite des Kernteils anhaftende Schaumkunststoff beispielsweise nur noch per Hand von dem Kernteil abgezogen. Eine weitere Bearbeitung der Unterseite der Einlegesohle ist nicht mehr erforderlich, da das Kernteil bereits eine für den Schuh geeignete Außenform aufweist.

Mit dem erfindungsgemäßen Herstellverfahren wird also ein Verfahren bereitgestellt, welches nicht nur den Arbeitsaufwand bei der Herstellung von Einlegesohlen senkt, sondern auch aufgrund der Fertigung des Kernteils als Formteil, vorzugsweise in einem Spritzgussprozess, auch eine konstante hohe Qualität und Formgenauigkeit erreicht.

## Patentansprüche

1. Schaumkunststoff-Schuheinlegesohlen-Rohling (1), umfassend ein Kernteil (2), das sich vom Fersenbereich bis zumindest zum Mittelfußbereich erstreckt und als dreidimensional geformtes, im Vergleich zum eingesetzten Schaumkunststoff hartes, fußstützendes, schaumkunststoff- und sohlenstabilisierendes Formteil ausgebildet und mit Schaumkunststoff (3) angeschäumt ist und das eine dem Fuß zugewandte Innenseite und eine dem Fuß abgewandte Außenseite aufweist,
**dadurch gekennzeichnet, dass**
zumindest Teilbereiche der Innenseite des Kernteils (2) so ausgebildet sind, dass sie mit dem Schaumkunststoff (3) eine dauerhafte Verbindung eingehen, und die Außenseite des Kernteils (2) schuhinnenformangepasst ist, die der Schuhsohle zugewandten Unterseite der Schuheinlegesohle (1) bildet und zumindest Teile der Außenseite des Kernteils nach dem Entfernen des Rohlings aus einer Ausschäumform sichtbar sind.

2. Rohling nach Anspruch 1, bei dem das Kernteil (2) durch Spritzgießen hergestellt ist.

3. Rohling nach Anspruch 1 oder 2, bei dem sich das Kernteil (2) über die gesamte Länge der Einlegesohle erstreckt.

4. Rohling nach einem der vorangegangenen Ansprüche, bei dem das Kernteil (2) Fixiermittel aufweist, mit denen das Kernteil (2) in einer Form festlegbar ist.

5. Rohling nach einem der vorangegangenen Ansprüche, welcher ein geschliffenes oder gefrästes Fußbett auf der Oberseite der Einlegesohle (1) aufweist.

6. Rohling nach einem der vorangegangenen Ansprüche, bei dem das Kernteil (2) mindestens eine Durchgangsöffnung (4) aufweist.

7. Einlegesohle nach einem der vorangegangenen Ansprüche, bei der das Kernteil (2) im Fersenbereich eine Aussparung (5) aufweist.

8. Verfahren zum Herstellen von Schaumkunststoff-Schuheinlegesohlen-Rohlingen (1) nach einem der Ansprüche 1 bis 7, mit folgenden Schritten:
a) Vorfertigen eines Kernteils (2) das sich vom Fersenbereich bis zumindest zum Mittelfußbereich erstreckt und als dreidimensional geformtes, im Vergleich zum eingesetzten Schaumkunststoff hartes, fußstützendes und sohlenstabilisierendes Formteil ausgebildet ist und das eine einem Schuhinnern zugewandte Innenseite, die sich zumindest in Teilbereichen mit dem Schaumkunststoff (3) dauerhaft verbindet, und eine zur Schuhsohle gewandte Außenseite aufweist, die die der Schuhsohle zugewandte Unterseite der fertigen Schuheinlegesohle (1) bildet und bereits eine für den Schuh geeignete Form aufweist,
b) Einlegen des Kernteils (2) in eine Ausschäumform im Wesentlichen parallel, mit dem kleinstmöglichen Abstand zum Boden der Ausschäumform, sodass die Außenseite des Kernteils in der fertigen Schuheinlegesohle vom Fersen- bis zumindest zum Mittelfußbereich die der Schuhsohle zugewandte Unterseite der Schuheinlegesohle (1) bildet,
c) Festsetzen des Kernteils (2) in der Ausschäumform,
d) Ausschäumen der Ausschäumform durch Anschäumen zumindest der Innenseite des Kernteils (2) mit Schaumkunststoff,
e) Aushärten des Schaumkunststoffs (3) in der Ausschäumform,
f) Entnehmen des Einlegesohlen-Rohling (1) aus der Ausschäumform, nach welchem zumindest Teile der Außenseite des Kernteils (2) sichtbar sind.

9. Verfahren zum Herstellen von Schaumkunststoff-Schuheinlegesohlen-Rohlingen (1) nach Anspruch 8, bei dem das Kernteil (2) durch Stützstifte, die in Bohrungen (4) des Kernteils (2) eingreifen, in der Ausschäumform festgesetzt wird.

10. Verfahren zum Herstellen von Schaumkunststoff-Schuheinlegesohlen-Rohlingen (1) nach Anspruch 9, bei dem mindestens einer der Stützstifte so ausgebildet ist, dass er im Kernteil (2) wiederlösbar einrastet.

11. Verfahren zum Herstellen von Schaumkunststoff-Schuheinlegesohlen-Rohlingen (1) nach einem der Ansprüche 8 bis 10, bei dem das Kernteil (2) so ausgebildet ist, dass es beim Ausschäumen der Form über Durchtrittsöffnungen den Durchtritt der Schaumkunststoff-Masse gestattet.

12. Verfahren zum Herstellen von Schaumkunststoff-Schuheinlegesohlen-Rohlingen (1) nach einem der Ansprüche 8 bis 11, bei dem Polyurethanschaum (PU) in der Ausschäumform an das Kernteil (2) angeschäumt wird.

13. Verfahren zum Herstellen von Schaumkunststoff-Schuheinlegesohlen-Rohlingen (1) nach einem der Ansprüche 8 bis 12, bei dem nach der Entnahme des Schuheinlegesohlen-Rohlings (1) aus der Ausschäumform auf dessen fußzugewandter Oberseite ein Fußbett durch Schleifen oder Fräsen erzeugt wird.

## Claims

1. Foam plastic shoe insole blank (1), comprising a core part (2), which extends from the heel region to at least the midfoot region and is formed as a foot-supporting, foam-plastic and sole-stabilizing moulded part which is three-dimensionally shaped and hard in comparison with the foam plastic that is used, where the core part has foam plastic (3) moulded onto it and has an inner side facing the foot and an outer side facing away from the foot,
**characterized in that**
at least partial areas of the inner side of the core part (2) are formed such that they enter into a permanent connection with the foam plastic (3), and the outer side of the core part (2) is adapted to the inner shape of the shoe, forms the underside of the shoe insole (1), facing the sole of the shoe, and at least parts of the outer side of the core part are visible after the blank has been removed from a foaming mould.

2. Blank according to Claim 1, in which the core part (2) is produced by injection moulding.

3. Blank according to Claim 1 or 2, in which the core part (2) extends over the entire length of the insole.

4. Blank according to one of the preceding claims, in which the core part (2) has fixing means, by which the core part (2) can be fixed in a mould.

5. Blank according to one of the preceding claims, which has a ground or milled footbed on the upper side of the insole (1).

6. Blank according to one of the preceding claims, in which the core part (2) has at least one through-opening (4).

7. Insole according to one of the preceding claims, in which the core part (2) has a clearance (5) in the heel region.

8. Method for producing foam plastic shoe insole blanks (1) according to one of Claims 1 to 7, with the following steps:
a) prefabricating a core part (2), which extends from the heel region to at least the midfoot region and is formed as a foot-supporting and sole-stabilizing moulded part which is three-dimensionally shaped and hard in comparison with the foam plastic that is used, where the core part has an inner side that faces the interior of the shoe and is permanently connected at least in partial areas to the foam plastic (3) and an outer side that faces the sole of the shoe, forms the underside of the finished shoe insole (1), facing the sole of the shoe, and already has a shape that is suitable for the shoe,
b) inserting the core part (2) into a foaming mould substantially parallel to the bottom of the foaming mould, at the smallest possible distance from the bottom, so that, in the finished shoe insole, the outer side of the core part from the heel region to at least the midfoot region forms the underside of the shoe insole (1) that is facing the sole of the shoe,
c) fixing the core part (2) in the foaming mould,
d) filling the foaming mould with foam by moulding foam plastic onto at least the inner side of the core part (2),
e) curing the foam plastic (3) in the foaming mould,
f) removing the insole blank (1) from the foaming mould, after which at least parts of the outer side of the core part (2) are visible.

9. Method for producing foam plastic shoe insole blanks (1) according to Claim 8, in which the core part (2) is fixed in the foaming mould by supporting pins, which engage in bores (4) in the core part (2).

10. Method for producing foam plastic shoe insole blanks (1) according to Claim 9, in which at least one of the supporting pins is formed in such a way that it locks re-releasably in the core part (2).

11. Method for producing foam plastic shoe insole blanks (1) according to one of Claims 8 to 10, in which the core part (2) is formed in such a way that, when filling the mould with foam, it allows the foam plastic compound to pass through via through-openings.

12. Method for producing foam plastic shoe insole blanks (1) according to one of Claims 8 to 11, in which polyurethane foam (PU) is moulded onto the core part (2) in the foaming mould.

13. Method for producing foam plastic shoe insole blanks (1) according to one of Claims 8 to 12, in which, after the removal of the shoe insole blank (1) from the foaming mould, a footbed is produced on its upper side, facing the foot, by grinding or milling.

## Revendications

1. Ébauche (1) pour semelle intérieure de chaussure en mousse plastique, comprenant une partie formant âme (2), qui s'étend depuis la région du talon au moins jusqu'à la région du métatarse, est réalisée sous forme de pièce moulée de forme tridimensionnelle stabilisant la semelle et la mousse plastique, supportant le pied, dure par rapport à la mousse plastique introduite, est moussée avec la mousse plastique (3) et présente un côté intérieur tourné vers le pied et un côté extérieur opposé au pied,
**caractérisée en ce**
**qu'**au moins des régions partielles du côté intérieur de la partie formant âme (2) sont réalisées de telle sorte qu'elles soient reliées de manière durable à la mousse plastique (3), et le côté extérieur de la partie formant âme (2) est adapté à la forme interne de la chaussure, lequel côté extérieur forme le côté inférieur tourné vers la semelle de chaussure de la semelle intérieure de chaussure (1), et au moins des parties du côté extérieur de la partie formant âme sont visibles après l'enlèvement de l'ébauche hors d'un moule de moussage.

2. Ébauche selon la revendication 1, dans laquelle la partie formant âme (2) est fabriquée par moulage par injection.

3. Ébauche selon la revendication 1 ou 2, dans laquelle la partie formant âme (2) s'étend sur toute la longueur de la semelle intérieure.

4. Ébauche selon l'une quelconque des revendications précédentes, dans laquelle la partie formant âme (2) présente des moyens de fixation avec lesquels la partie formant âme (2) peut être fixée dans un moule.

5. Ébauche selon l'une quelconque des revendications précédentes, présentant une base de pied meulée ou fraisée sur le côté supérieur de la semelle intérieure (1).

6. Ébauche selon l'une quelconque des revendications précédentes, dans laquelle la partie formant âme (2) présente au moins une ouverture de passage (4).

7. Semelle intérieure selon l'une quelconque des revendications précédentes, dans laquelle la partie formant âme (2) présente, dans la région du talon, un évidement (5).

8. Procédé de fabrication d'ébauches (1) pour semelle intérieure de chaussure en mousse plastique selon l'une quelconque des revendications 1 à 7, comprenant les étapes suivantes :
a) préfabrication d'une partie formant âme (2) qui s'étend depuis la région du talon au moins jusqu'à la région du métatarse, est réalisée sous forme de pièce moulée de forme tridimensionnelle stabilisant la semelle, supportant le pied, dure par rapport à la mousse plastique introduite, présente un côté intérieur tourné vers l'intérieur de la chaussure, lequel est relié de manière durable à la mousse plastique (3) au moins dans des régions partielles, et présente un côté extérieur tourné vers la semelle de chaussure, lequel forme le côté inférieur tourné vers la semelle de chaussure de la semelle intérieure de chaussure finie (1) et présente déjà une forme appropriée pour la chaussure,
b) insertion de la partie formant âme (2) dans un moule de moussage essentiellement parallèlement avec la distance la plus petite possible au fond du moule de moussage, de sorte que le côté extérieur de la partie formant âme, dans la semelle intérieure de chaussure finie, depuis la région du talon au moins jusqu'à la région du métatarse, forme le côté inférieur tourné vers la semelle de chaussure de la semelle intérieure de chaussure (1),
c) fixation de la partie formant âme (2) dans le moule de moussage,
d) remplissage par moussage du moule de moussage par injection de mousse au moins du côté intérieur de la partie formant âme (2) avec la mousse plastique,
e) durcissement de la mousse plastique (3) dans le moule de moussage,
f) enlèvement de l'ébauche pour semelle intérieure (1) hors du moule de moussage, après quoi au moins des parties du côté extérieur de la partie formant âme (2) sont visibles.

9. Procédé de fabrication d'ébauches (1) pour semelle intérieure de chaussure en mousse plastique selon la revendication 8, dans lequel la partie formant âme (2) est fixée dans le moule de moussage par des goupilles de support qui s'engagent dans des alésages (4) de la partie formant âme (2).

10. Procédé de fabrication d'ébauches (1) pour semelle intérieure de chaussure en mousse plastique selon la revendication 9, dans lequel au moins l'une des goupilles de support est réalisée de manière à s'encliqueter dans la partie formant âme (2) de manière à pouvoir en être à nouveau séparée.

11. Procédé de fabrication d'ébauches (1) pour semelle intérieure de chaussure en mousse plastique selon l'une quelconque des revendications 8 à 10, dans lequel la partie formant âme (2) est réalisée de telle sorte que lors du remplissage par moussage du moule par le biais d'ouvertures de passage, elle forme le passage pour la composition de mousse plastique.

12. Procédé de fabrication d'ébauches (1) pour semelle intérieure de chaussure en mousse plastique selon l'une quelconque des revendications 8 à 11, dans lequel de la mousse de polyuréthane (PU) est moussée dans le moule de moussage sur la partie formant âme (2).

13. Procédé de fabrication d'ébauches (1) pour semelle intérieure de chaussure en mousse plastique selon l'une quelconque des revendications 8 à 12, dans lequel, après l'enlèvement de l'ébauche (1) pour semelle intérieure de chaussure hors du moule de moussage, une base de pied est produite par meulage ou fraisage sur son côté supérieur tourné vers le pied.
